# EUROPEAN PATENT APPLICATION

(11) **EP 1 585 206 A1**
(43) Date of publication of application: **12.10.2005**
(21) Application number: 05075576.8
(22) Date of filing: 09.03.2005
(51) Int. Cl.: H02J 3/18

(54) **Rephasing assembly for electrical power grids**

(30) Priority: 15.03.2004 IT MI20040478
(71) Applicant: Icar S.p.A. - Industria Condensatori, 20123 Milan (IT)
(72) Inventor: Folli, Francesco, 20145 Milan (IT)
(74) Representative: Coppo, Alessandro

(57) **Abstract**

Assembly for rephasing single-phase or three-phase charges of an electrical power grid in the presence of harmonics comprising a reactance that can be associated with each phase of the power supply grid and a plurality of condenser groups. Each group is associated with one of said reactances and having a predetermined number of condensers connected together through the actuation of one or more switches.

## Description

The present invention refers to a rephasing assembly for electrical power grids, like single-phase grids or three-phase grids.

Electrical apparatuses absorb a certain amount of current from the power supply grid depending upon the electrical characteristics of the apparatuses themselves. The product of such current for the voltage applied is called apparent power (S) and it is based upon this power that the electrical installation must be sized. The power absorbed by the apparatus and that it is able to supply to the outside in the form of work or heat is normally less than the apparent power and is called active power (P). The ratio between the active power and the apparent power is the power factor (also known as cosϕ, variable from 0 to 1), i.e. able to be associated with the phase shift existing between the current and the voltage. The cosϕ is equal to one when the apparent power corresponds to the active power, it is less than one when the apparent power consists partly of reactive power and partly of active power. Most users have a low power factor and require more apparent power and therefore more current from the line than it would require with a higher cosϕ. For this reason, current standards and technical considerations establish that electrical energy is to be used with a power factor of no less than 0.9. A situation of this type can be obtained by inserting batteries of condensers into the installation carrying out the so-called rephasing. There are fundamentally two advantages that can come from rephasing: no penalty that the electricity company usually enforces upon whoever uses electrical energy with an average monthly power factor of less than 0.9 and better use of the installations.

The insertion of one or more rephasing condensers into the electricity grid determines the reduction of the reactive component of the current and the consequent decrease in the overall current absorbed by the circuit. All of this is followed by an overall decrease in the necessary reactive power and an improvement of the power factor.

The selection of the condenser is a function of the type of system (single-phase or three-phase) and of the type of connection (star or triangle).

It is known that if the charges are controlled through electronic actuations they generate distortions of the currents and of the voltages, or rather they generate harmonics, which can make the rephasing operation problematic, given that the condensers tend to amplify these distortions.

Such harmonics have a multiple frequency of that supplied in the grid and produce a series of drawbacks, such as an increase in losses by the joule effect on the voltages, phenomena vibration in asynchronous motors, etc...

To avoid these drawbacks that can damage both the condensers and the other apparatuses connected to the grid, the rephasing banks, generally made with many steps, so as to be able to compensate for the reactive power inserted according to needs, are constructed by assembling reactances generally with an iron core tuned to a lower frequency than the first existing harmonic in series with each group of condensers. The tuning frequencies most used are, respectively, 130-180-210 Hz or values close to these for 50Hz grids and 155-215-250Hz for 60Hz grids. The lowest values are used for grids with the highest harmonic content.

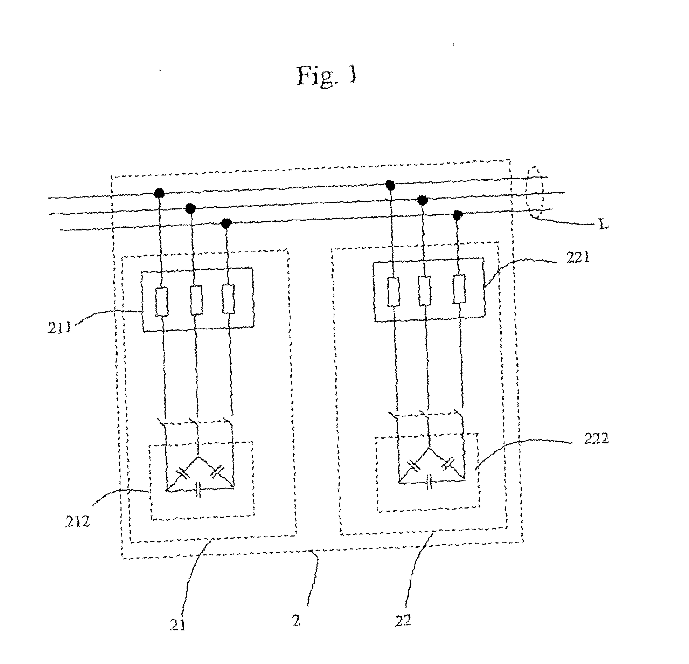

In figure 1 a rephasing assembly 2 according to the prior art for a three-phase line T is illustrated that consists of a first step 21 having a first inductance group 211 and a first condenser group 212 and a second step 22 having a second inductance group 221 and a second condenser group 222.

Each of said inductance - condenser groups is tuned to a frequency as specified above.

For the purposes of the present invention, by tuning frequency we mean the frequency for which the relationship: ω*LC*=1 is valid, with ω=2*π*f where f is the tuning frequency, L is the inductance of a phase of the reactor and C is the phase capacity or star equivalent.

These assemblies are defined as blocking filters because they prevent harmonics from passing.

There are also filters that absorb harmonics or absorption filters tuned to the harmonic frequencies to be eliminated (250-350-550Hz for 50 Hz grids and 300-420-660Hz for 60Hz grids, in this case the steps can be tuned to these very frequencies, e.g. the first to 250 Hz, the second to 350 Hz, etc.)

The Applicant has observed that in known filters every step is made from a reactance - condenser group that can be assembled as a whole by a suitable switch.

According to the present invention a blocking assembly is made where with a single reactance two or more steps are made, for example three or four, inserting two or more groups of condensers in parallel. The tuning frequency of the assembly can vary, for example for a 50 Hz grid between 240 Hz (with a single group of condensers inserted) and 100 Hz (with all of the groups of condensers inserted); whereas for a 60Hz grid between 288 Hz and 120 Hz.

An aspect of the present invention concerns an assembly for rephasing single-phase or three-phase charges of an electrical power grid in the presence of harmonics characterised in that it comprises at least one reactance that can be associated with each phase of the power supply grid and a plurality of groups of condensers, each group being associated with one of said reactances and having a predetermined number of condensers connected together through the actuation of one or more switches.

The characteristics and advantages of the assembly according to the present invention shall become clearer from the following description, given as an example and not limiting purposes, of an embodiment with reference to the attached figures in which:
figure 1 illustrates a rephasing assembly according to the prior art associated with a three-phase line;
figure 2a illustrates a first embodiment of a rephasing assembly according to the present invention associated with a three-phase line;
figure 2b illustrates a second embodiment of a rephasing assembly according to the present invention associated with a three-phase line.

With reference to the figures, the rephasing assembly according to the present invention comprises at least one reactance that can be associated with a phase of the power supply line to be rephased and a plurality of groups of condensers, each group having a predetermined variable number of condensers through the actuation of one or more switches.

Such a reactance is in connection with said plurality of groups of condensers so as to make an assembly, having a reactance and a plurality of condensers for each phase of the line.

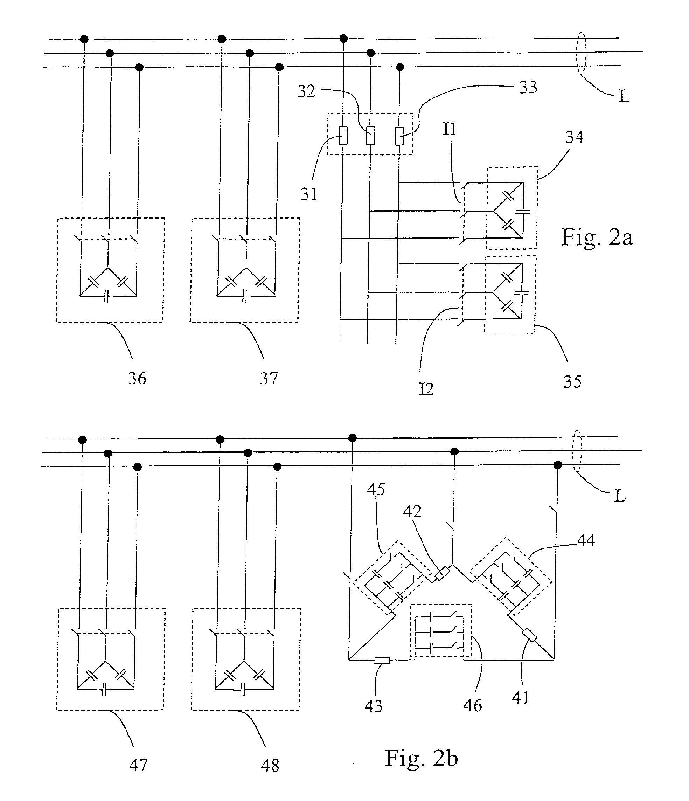

In particular, in figure 2a a first embodiment of the assembly is illustrated, associated with a three-phase power supply line L, which comprises three single-phase reactances 31, 32, 33 or else a three-phase reactance that can each be associated with a phase of the line L, and a first group of condensers 34, connected together for example in a triangle that can be associated with said reactances through a first switch I1.

Moreover, the assembly comprises a second group of condensers 35, connected together for example in a triangle, able to be associated with said reactances through a second switch I2.

Moreover, the assembly can also comprise a third group of condensers 36, connected together for example in a triangle, able to be associated with said line L and a fourth group of condensers 37, connected together in a triangle, able to be associated with said line L.

Moreover, such groups of condensers of figure 2a could be connected together in an equivalent way even in a star.

Such a reactance 31 32 33 associated with the group of condensers 34 and 35 of figure 2a operates in the following way. With just one step, i.e. with just one group of condensers inserted, the assembly is stressed with a harmonic content that gets higher the higher the tuning frequency, but in any case not such as to jeopardize the correct operation of the condensers. As far as the reactance is concerned, this overcharge is generally negligible because it is sized for the total current absorbed and therefore for a much greater current than that circulating with just one step, even if it suffers from a low harmonic percentage. The voltage at the ends of the condensers increases through the effect of the reactance in series and is slightly greater than the grid voltage (about 5%). With all of the groups of condensers inserted the harmonic content is negligible whereas the voltage at the ends of the condensers is greater than 20% of the grid voltage.

With reference to the embodiment of figure 2b the assembly comprises three single-phase reactances 41, 42, 43, or one three-phase reactance able to be associated with the three-phase line L, in series with each of them there is a capacitor group 44, 45, 46 made up of a plurality of condensers connected in parallel to each other. The branches defined by a reactance and a group of condensers are connected together in a triangle.

A switch is foreseen associated with each condenser suitable for connecting one condenser to another in parallel so as to create a plurality of steps of the assembly.

Moreover, the assembly can also comprise a fifth group of condensers 47, connected to each other in a triangle, able to be associated with said line L and a sixth group of condensers 48, connected together in a triangle, able to be associated with said line L.

Moreover, such groups of condensers 47 and 48 illustrated in figure 2b could be connected to each other in an equivalent manner in a star.

The filters made according to the present invention have inductances and capacities of the condensers having suitable values, for example to have a tuning frequency between a maximum value of 240 Hz and a minimum value of 100 Hz for 50 Hz grids and between 288 Hz and 120 Hz for 60 Hz grids; the higher frequencies refer to the minimum power step with a single group of condensers inserted, whereas the lower frequencies are when all of the condensers are inserted.

The assembly according to the present invention has just one reactance for each phase, sized for a negligible harmonic content and therefore a lower cost with respect to the solution according to the state of the art.

Generally, the apparatuses do not always work at full power, consequently the condensers most of the time work at a lower frequency with respect to the maximum with an increase in lifetime. The construction of the apparatus is simplified with it being easy to make a condenser compartment and a compartment for the reactance.

When one or more steps of low power are required it is possible, if the resonance frequency of the condensers with the short-circuit reactance of the power supply grid is greater than 650Hz or else than 780Hz, respectively, for grids at 50 -60Hz, to use just condensers given that only the harmonics above the thirteenth (650-780Hz) that are small in size are amplified (see the condensers 36, 37, 47, 48 in figures 2a and fig.2b).

## Claims

1. Assembly for rephasing single-phase or three-phase charges of an electrical power grid in the presence of harmonics **characterised in that** it comprises at least one reactance that can be associated with each phase of the power supply grid and a plurality of condenser groups, each group being associated with one of said reactances and having a predetermined number of condensers connected together through the actuation of one or more switches.

2. Assembly according to claim 1, wherein through the actuation of said switches one or more steps tuned to predetermined frequencies are made.

3. Assembly according to claim 1, wherein said condensers of each group are connected in parallel with each other.

4. Assembly according to claim 1, wherein said power supply grid is a three-phase line and wherein each reactance (31, 32, 33) is connected to a phase of the line (L) and each group of condensers (34, 35) associated with said three-phase line has the condensers connected together in a triangle or in a star.

5. Assembly according to claim 1, wherein said power supply grid is a three-phase line and wherein each reactance (41, 42, 43) is connected in series to a group of condensers (44, 45, 46) connected in parallel with each other, each branch defined by a reactance and a group of condensers being connected to the other according to a triangle scheme.

6. Assembly according to claim 4 or 5, comprising at least one further group of condensers (36, 37, 46, 47) connected in a triangle or in a star associated with said three-phase line (L).

7. Assembly according to claim 2, wherein the inductance and capacity values of said reactances and said condensers are selected so as to have a tuning frequency between a maximum value of about 240 Hz and a minimum value of about 100 Hz for 50 Hz grids and between about 288 Hz and about 120 Hz for 60 Hz grids.

8. Assembly according to claim 7, wherein the tuning frequencies of 240 and 288 Hz are obtained with a power step generated with a single group of condensers inserted through the aforementioned switches.

9. Assembly according to claim 7, wherein the tuning frequencies of 100 and 120 Hz are obtained with all of the condensers inserted through the aforementioned switches.
